# EUROPEAN PATENT APPLICATION

(11) **EP 3 078 829 A1**
(43) Date of publication of application: **12.10.2016**
(21) Application number: 15162905.2
(22) Date of filing: 09.04.2015
(51) Int. Cl.: F02B 31/08, F02B 1/14, F02B 1/06, F02D 41/30, F02F 1/42, F02B 27/02, F02D 41/00, F02D 9/02, F02B 31/00

(54) **INTERNAL COMBUSTION ENGINE WITH DUAL SWIRL INTAKE**

(71) Applicant: ETH Zurich, 8092 Zurich (CH)
(72) Inventor: BOULOUCHOS, Konstantinos, 8006 Zürich (CH); SCHMITT, Martin, 8134 Adliswil (CH)

(57) **Abstract**

In order to extent the operation range of an internal combustion engine, i.e. the operation range of a HCCI engine, or to increase the compression ratio of a spark ignition engine (Otto engine) the invention proposes generating a dual swirl in the cylinder. According to the invention the strength of the dual swirl is variable and adjustable or feedback controllable.

For the HCCI combustion mode the stratification of the temperature field is adjustable by the strength of the dual swirl flow motion which allows extending the operation towards higher engine loads. In addition, the dual swirl prevents the mixing of the gases in the two intake channels, which can be used to generate stratified mixtures without employing a direct injection system. This can be used for extending the HCCI operation range towards lower loads. In case of spark ignition engines the dual swirl can generate a more homogeneous temperature distribution allowing higher compression ratios and thus higher engine efficiencies.

## Description

### Technical field

The invention is related to an internal combustion engine with dual swirl intake according to the first part of claim 1. Furthermore, the invention relates to a method operating an internal combustion engine with dual swirl intake.

### Background of the invention

Most of the engines for road transportation are based on combustion engines. However, these combustion engines are responsible for a large amount of worldwide emissions of carbon dioxide as well as other disadvantageous materials like NOₓ or soot. Reducing the CO₂ and NOₓ as well as soot is thus a major task toward achieving the long-term goal of protecting the global environment.

In the last years several suggestions had been disclosed in order to reduce the CO₂ emissions by increasing the efficiencies of combustion engines. Some of these suggestions are related to common technologies of gasoline engine (Otto engines) and Diesel engines. One particular suggestion is related to the technology of homogeneous charge compression ignition (HCCI) which is an internal combustion engine which well-mixed fuel and oxidizer - typically air - are compressed to the point of auto ignition. HCCI engines are fuel-lean and can operate at diesel-like compression ratios, thereby achieving higher efficiencies than conventional gasoline engines with spark ignition. It is well-known that homogeneous mixing of fuel and air leads to cleaner combustion and lower emissions. The peak temperatures are significantly lower than in typical combustion engines with spark ignition, resulting reduced NOx emissions. Additionally, the lean mixtures cause significantly reduced soot emissions. HCCI engines are not limited to gasoline fuel but can also operate with diesel fuel and most alternative fuels. However, combustion occurs very quickly after auto-ignition has started. Thus, when auto-ignition occurs too early or with too much chemical energy, combustion is too fast and high in-cylinder pressures can destroy an engine.

Furthermore, HCCI technology may cause several problems which have to be overcome by particular techniques. Auto ignition is difficult to control, unlike the ignition event in engines with spark ignition or diesel fuel injection ignition. Additionally, HCCI engines according to the state of the art have a small power range, constrained at low loads by lean flammability limits and high loads by in-cylinder pressure restrictions.

In an HCCI engine, however, the homogeneous mixture of fuel and air is compressed and combustion begins whenever sufficient pressure and temperature are reached. This means that no well-defined combustion initiator provides direct control. Engines must be designed so that ignition conditions occur at the desired timing. The aforementioned problems cause the HCCI engine to be limited to a small dynamic power range constrained at low loads by lean flammability limits and high loads by in-cylinder pressure restrictions. This problem has been suggested to be overcome by a technology mixture of HCCI technology for lower load and spark ignition technology for higher load or HCCI technology for lower load and diesel fuel ignition technology for higher load. The auto ignition condition of an HCCI engine is highly sensitive to temperature. Simple temperature control methods use resistance heaters to vary the inlet temperature, which technique may be too slow to change on a cycle-to-cycle frequency. A more sophisticated approach is known as *fast thermal* management (FTM), varying the intake charge temperature by mixing hot and cold air streams. This technique, however, is complicated and expensive to implement and has limited bandwidth associated with the available energy.

The prospects and the problems of HCCI technology can be summarized as
- HCCI is a promising new engine concept, which combines the efficiency of Diesel engines with the low emissions of the Otto approach. The potential of the HCCI combustion process is estimated Epping, K., Aceves, S., Bechtold, R., and Dec, J., "The Potential of HCCI Combustion for High Efficiency and Low Emissions," SAE Technical Paper 2002-01-1923, 2002. In the paper it is claimed that if the HCCI technology is implemented to 100 % in the USA around 40 billion gallons of Gasoline can be saved in 2020. Also under the assumption of 25% market penetration of HCCI engines gasoline saving in the range of 5-10 billion gallons are possible. Up to know the application of HCCI type engine is prohibited by the limited controllability. The patent idea of the dual vortex ring could provide the required control parameter to operate HCCI type engines.
- The evolution of the flow, temperature and species fields during the compression stroke influences efficiency and emissions of many engine concepts.
- According to the state of the art, the practical application is limited since the ignition timing at high loads is difficult to control and the pressure increases rapidly, causing a high noise level and high structural engine stresses.

According to Dec, John E. "Advanced compression-ignition engines - understanding the in-cylinder processes." Proceedings of the Combustion Institute 32.2: 2727-2742, 2009 these problems could be solved by an enhanced thermal stratification, but up to now the local temperature field during compression can be controlled only to a limited extend.
- For low engine loads the efficiency drops due to throttling losses, very lean mixtures or high EGR rates, which result also in increased HC and CO emissions. These problems can be partially solved by a delayed injection timing producing a stratified gas/fuel mixture.

This approach, however, requires a complex and expensive direct fuel injection system, which is complicated to control. The applicability of this method is limited by strongly increased NOx emissions for very late injection timings.

The problem of the limited control over the temperature field during compression is not limited to HCCI engines. Since thermal inhomogenities can cause difficulties for all kinds of internal combustion engines. The hotter zones below the exhaust valves, for example, can result in increased cycle-to-cycle variations, enhanced knocking probabilities or higher pressure fluctuations for Diesel engines.

In US 6 321 715 B1 and FR 2 887 299 A1 as well as in US 4 389 988 A it has been proposed to improve the efficiency of an internal combustion engine by a dual counter-rotating swirl during the intake cycle of the engine. The purpose of the measure proposed by US 4 389 988 A is a better mixture of the fuel within the cylinder whereas the dual counter-rotating swirl is suggested to be achieved by fins in the intake means. The purpose of the measure proposed by US 6 321 715 B1 is to avoid mixing during intake and compression between the two intake channels. According to US 6 321 715 B1, one intake channel inducts a specific air/fuel mixture and the other one exhaust gas resulting in a stratified mixture before combustion. The dual counter-rotating swirl is suggested by US 6 321 715 B1 to be achieved by accordingly directed channel of both intakes. The purpose of the measure proposed by FR 2 887 299 A1 is avoiding a self-ignition (knocking) for spark ignition Otto engines whereas the dual counter-rotating swirl is suggested to be achieved by accordingly directed channels of two intakes. The dual flow motion is characterized by one clockwise rotating flow in the one half and one counter-clockwise rotating swirling motion in the other half of the cylinder according to all three cited prior art documents. Thermal problems, however, have not been identified to be solved by dual swirl technology.

### Description of the invention

According to a first aspect the invention has the object to provide an improved thermal and auto ignition control of an HCCI engine in a wider range of load and power. The invention solves this problem by a dual swirl intake method of the fuel-air mixture similar to the dual swirl as known from the cited prior art documents. According to the invention as set forth by claim 1, however, the dual swirl is controllable in respect to the amount in order to be usable for a wide range of load and power. The invention is based on the control of the temperature fields during the compression stroke with a dual swirl flow motion created during the intake by specially designed intake channel configurations. The dual flow motion is characterized by one clockwise rotating flow in about one half and one counterclockwise rotating swirling motion in the other half of the cylinder.
The flow field affects the temperature field by transporting cold gases from the boundary layer at one side of the cylinder towards the bulk gas and on the other side moving hot gases from the cylinder center towards the cylinder wall. As an effect the temperature on one side of the cylinder is significantly lower than on the other side. The temperature difference between the relatively hotter and the cooler side of the cylinder is proportional to the strength of the dual swirl fluid motion. Thus the thermal stratification in the cylinder of the internal combustion engine can be controlled by the dual swirl fluid motion. The dual swirl fluid motion can be controlled or adjusted, respectively by stream directing clacks or by damper flaps in the two intake channels. Alternatively or additionally, the dual swirl fluid motion can be controlled by adjustable vanes and/or by different pressures in the intake channels by means of turbocharger control or compressor.

In addition the dual swirl flow motion prevents mixing of the gases in the two intake channels. Thus the species mixing can be controlled by different gas compositions in the two intake channels and the stability of the dual swirl flow motion, which depend on the symmetry of the two swirls. Asymmetric swirls can be created e.g. by different flap positions in the two intake channels resulting in an earlier breakdown of the dual swirl flow motion and thus in a more homogeneous mixture distribution.

The operation of the idea has been proven based on highly resolved DNS calculations, the cited patents which use a similar flow structure, but for a different reason and analytic calculations. In summary the control of the dual swirl flow motion - which is not known from the prior art documents - allows to regulate temperature and mixture fields during the compression stroke.

The invention can be used in internal combustion engines and can be realized based on existing and well established technologies. This aspect of the invention aims at providing a control parameter over the temperature field - and/or the mixture ration in internal combustion engines. The control of the temperature and species fields during the compression stroke allows the improvement of several engine processes such as a significantly extend the applicability of HCCI type engines, which are characterized by high engine efficiencies in combination with very low soot and NOx emissions and lower cyclic variations with less noise production and higher engine efficiencies.

The measures of the invention have been surprisingly identified to have a similar positive effect to other types of internal combustion engines such as conventional spark ignition engines (Otto engines) and direct injection engines like Diesel engines. This is related to a second - more generalized - aspect of the invention. Dual swirl technology for conventional spark ignition engines can remove local hot spots (e.g. below the exhaust valves) resulting in significantly reduced knocking probabilities, higher possible compression ratios and, thereby, higher engine efficiencies.

A more homogeneous temperature distribution due to the use of the dual swirl can be also used in Diesel engines, since it can reduce pressure fluctuations for long ignition delay times.

Especially for engines small efficiency improvements have a large impact on the complexity and, thereby on the design and manufacturing costs. Additionally, less cylinder emission can save complicated exhaust gas treatment systems and thus also reduces the complexity.

The common idea of the invention is that the dual vortex ring could provide the required control parameter over the temperature and mixture field during compression to operate the respective engines. The strength of the first and second flow motion can be varied and is controlled using the load and/or power values of the engine.

According to a first aspect of the invention the internal combustion engine uses a homogeneous charge compression ignition (HCCI) in which mixed fuel and oxidizer, preferably air, are compressed to the point of auto ignition for at least a range of load and power of the engine.

According to a second aspect of the invention, the internal combustion engine is a spark ignition internal combustion engine, in which spark ignition is used for at least a range of load and power of the engine.

There are different methods provided to generate the dual swirl which method include generating the dual swirl by special formed vales, preferably shrouded valves, which are arranged in the intakes ports for creating said rotating air-fuel fluid flow and controlling its strength and/or its direction. Another method uses adjustable swirl vanes are arranged in the intakes ports for creating said rotating air-fuel fluid flow and controlling its strength.

The controlling means using the load and/or power of the reciprocating internal combustion engine determined can forward control the first and second flow motion by a predetermined function with the load, the engine RPM and power as an input. The function can be tuned and a table look-up method can be used. In a more sophisticated way, however, measurement means for measuring parameters of the combustion can be used. Such parameters are the combustion pressure, combustion timing and/or combustion temperatures. The controlling means can control the strength of the first and second flow motion using a feedback of the above-mentioned parameters of the combustion.

The aforementioned elements as well as those claimed and described in the following exemplary embodiments, to be used according to the invention, are not subject to any particular conditions by way of exclusion in terms of their size, shape, use of material and technical design, with the result that the selection criteria known in the respective field of application can be used without restrictions. It should be noted that all means used to implement the invention are not limited to a particular.

### Brief description of the drawings

Examples of the engine will hence forth be described in more detail by reference to the drawings, wherein are shown:
- Figure 1: a configuration of the intake channels according to a preferred embodiment of the invention comprising adjustable swirl vanes;
- Figure 2: a general picture of the dual swirl in the cylinder;
- Figure 3: a diagram of the pressure within the cylinder over the cycle angle (CA);
- Figure 4: is a diagram of the effects of the dual swirl in a spark ignition internal combustion engine;
- Figure 5: is a diagram of a dual swirl control by means of a cross in the intake channel producing a counter- clockwise swirl (left) and a clockwise swirl (right); and

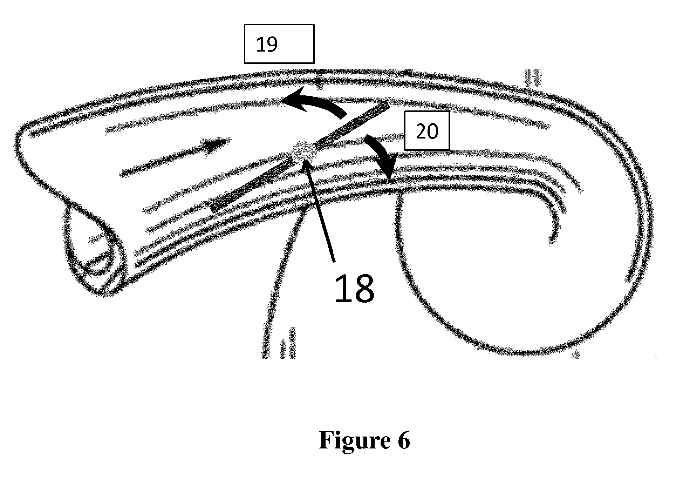

- Figure 6: is a diagram of a dual swirl control by means of a specific intake channel geometry.

### Preferred embodiments of the invention

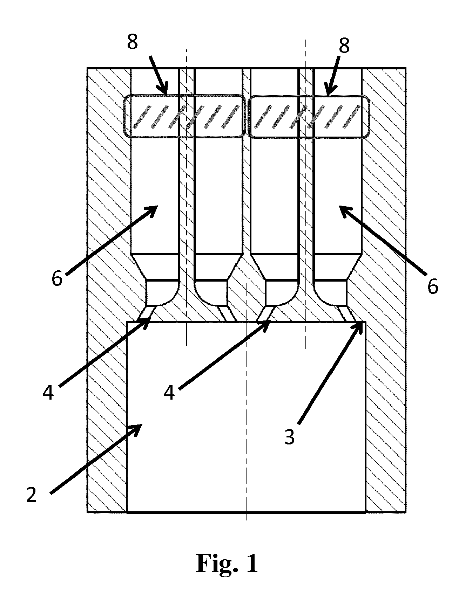

Figure 1 shows the upper part of a cylinder 2 of an internal combustion engine comprising two intake valves 4 around which valves 4 the intake channels 6 for the air/fuel mixture is loaded into the cylinder. The engine according to the embodiment of figure 1 is assumed as a homogeneous charge compression ignition engine (HCCI). Therefore no spark plugs and no additional fuel injectors are shown. However, it should be understood that the engine of this embodiment usually will be an engine with spark ignition or with additional fuel injection (Diesel), if the operation method HCCI cannot be used for all load/pressure combinations as explained above.

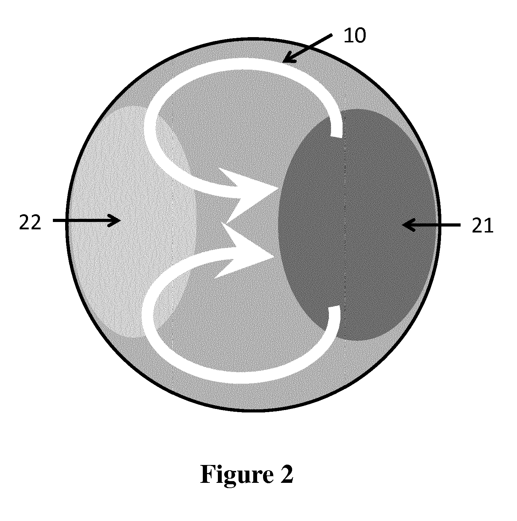

The air/fuel mixture is loaded from the upper ends of the intake channels 6 and ducted by the movable vanes 8 or flaps in the intakes channels thereby generating the dual swirl flow structure in the cylinder during compression as shown in figure 2.

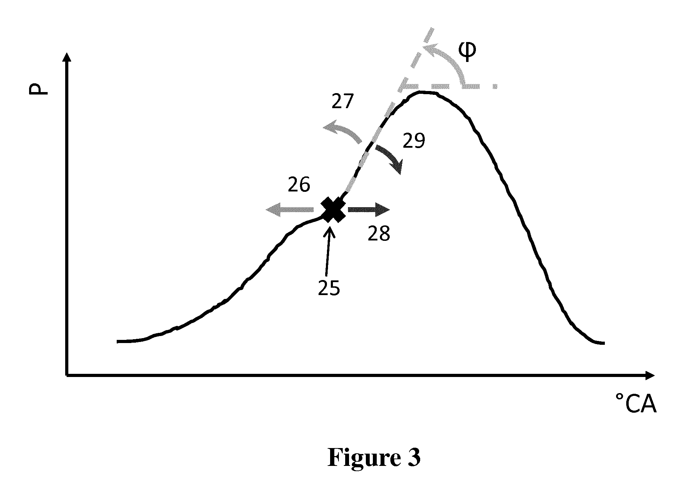

It should be noted that these vanes or flaps are similar to those flaps used for controlling tumble flow motion in conventional Otto engines. In the described embodiment the engine comprises a sensor assembly for the actual load and pressure status. A simple sensor determination assembly comprises a RPM measuring device and a power setting measuring device. The flaps are adjusted by using the values of these sensors. In a first embodiment this adjustment is done by a table look up using the RPM value and the throttle setting value whereby strength of the dual swirl is increased to retard the ignition and to lower the pressure raise rate after ignition and the strength of the dual swirl is decreased to advance the ignition and to make the pressure raise rate after ignition steeper, respectively. According to a second embodiment using the arrangement according to figure 1 the ignition time is measures and the flap setting is controlled using the feedback of the ignition time 25 in accordance with figure 3.

A second embodiment of the dual swirl generating means comprise specially formed intake channels whereby the intake channels are formed mirror-symmetric in order to generate two swirls as shown in Fig. 3 of US 6 321 715 B1 or in figure 1 of FR 2887 299 A1. The strength of the dual swirl which is not controlled according to the teaching of US 6 321 715 B1 or FR 2887 299 A1 can be controlled either by controllable damper means - flap 18 - like an additional throttle or by controllable narrowing means within the channels or the like. For this embodiment the flaps can be positioned in a more closed - direction 19 - for a weaker swirl or in more open - direction 20 - for a stronger swirl.

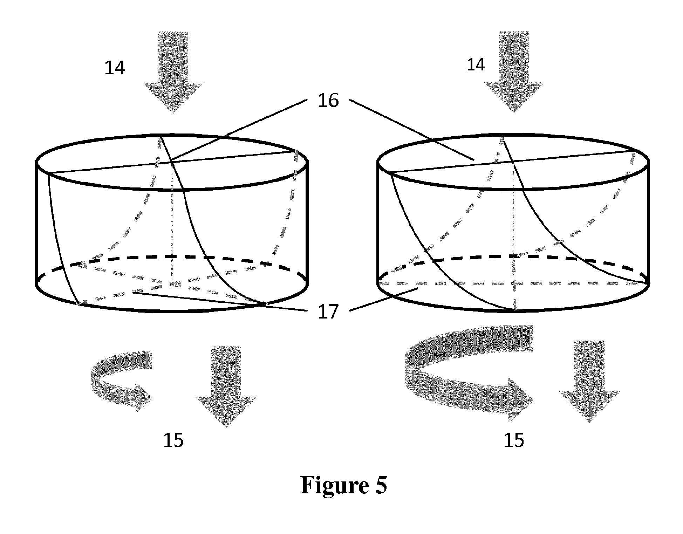

A third embodiment of the dual swirl generating means comprise specially formed valves, e.g. shrouded valves directing the flow in the desired direction in order to generate the dual swirl. This concept - known from figure 5 of US 6 321 715 B1 - can be used by varying the geometry in order to dynamically control the strength of the dual swirl.

A fourth embodiment of the dual swirl generating means comprises a rotatable cross joint in the intake channels, wherein the lower end 17 of the cross is skewed in respect to the upper end 16 of the cross. Thereby the flow 15 after the cross is rotated in respect to the flow 14 before the cross. By the position of such a cross joint the strength of the dual swirl can be adjusted or controlled, respectively.

Following, the effect of the measures of the invention for a HCCI engine should be explained. For high load operation, high pressure gradients are generated in the combustion room and a retarded ignition occurs, as shown in figure 3. Extending high pressure gradients can cause damages to the engine structure. As explained above, such situations had been avoided according to the prior art by avoiding the HCCI mode of operating the engine using conventional spark ignition operating mode (Otto engine mode) or ignition by fuel injection operating mode (Diesel engine mode). Using the measures of the invention the strength of the dual swirl is increased during high load operation with high pressure gradients by changing - increasing - the position of the vanes/flaps according to the first embodiment of the dual swirl generating means or the respective changes according to the other embodiments of the dual swirl generating means as described above. The strength of the dual swirl is increased and the pressure gradient is decreased - direction 29 - causing a later ignition time 28.

For lower load operation, pressure gradients may be too low which means that the pressure increases too slowly (see figure 3), resulting low engine efficiency. Furthermore, such a situation may cause greater cycle-to-cycle variations of the ignition and a misfire is generated in the combustion room. In this case, the position of the vanes/flaps according to the first embodiment of the dual swirl generating means is decreased or the respective changes according to the other embodiments of the dual swirl generating means as described above. The strength of the dual swirl is decreased as well as the thermal stratification and the pressure gradient is re-increased - direction 27 - causing an earlier ignition time 26. The control of the pressure gradient and the ignition time by a table look up uses the RPM and the throttle position and can easily pre-tuned for every HCCI engine. The higher sophisticated feedback control uses sensors - most of which are already uses in internal combustion engines - including pressure sensors, exit gas temperature sensors the measuring values of which directly indicate the HCCI operation conditions.

Surprisingly, the measures of the invention cause huge improvements not just for HCCI engines but also for other types of internal combustion engines. Following, the effect of the measures of the invention for a spark ignition engine (Otto engine) should be explained. The limiting factor for the compression ratio in a spark ignition engine is the auto-ignition of the air/fuel mixture which effect is known as knocking. Knocking occurs mainly in regions with locally higher temperatures, i.e. in the vicinity of the exhaust valves 5. In order to achieve a more homogeneous temperature distribution in the combustion room a controllable dual swirl can be generated - according to the first embodiment of the dual swirl generating means by flaps/vanes in the intake channels by the position of those flaps/vanes - cooling local temperature hotspots or transport hot gases to cooler temperature regions in the cylinder. According to this embodiment of the invention, the adjustment or the control, respectively, of the strength of the dual swirl is a temperature field which is homogeneous to the latest extent possible. The advantage has been demonstrated that the local hotspots can be eliminated having the effect of avoiding knocking. Thereby a higher compression ratio is possible for the spark ignition engine (Otto engine), resulting a higher engine efficiency for this type of an internal combustion engine.

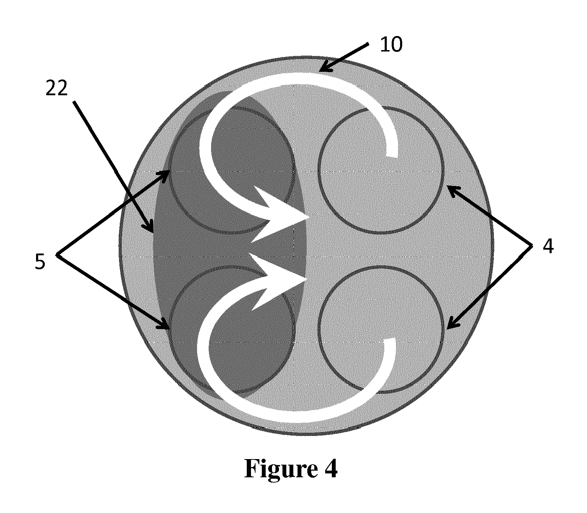

In figure 4 it is shown that the dual swirl transports cold air/fuel mixture gases from the intake valves 4 toward the wall or along the wall to a position near to the exhaust valves and hot gases from the hot zones in the vicinity of the exhaust valves 5 effecting a homogenization of the temperature field. It should be obvious for the skilled person that the dual swirl should be adjusted or controlled for different states of the spark ignition engine, too.

### List of reference signs

- 2: cylinder
- 3: cylinder head
- 5: exhaust valves
- 6: intake channels
- 8: adjustable vanes
- 10: dual swirl
- 14: flow in the intake channel above the cross
- 15: flow in the intake channel below the cross
- 16: upper end of the swirl producing cross
- 17: lower end of the swirl producing cross
- 18: Flap
- 19: Flap direction for weaker swirl
- 20: Flap direction for stronger swirl
- 21: cool zone
- 22: hot zone
- 25: ignition time
- 26: direction of earlier ignition time
- 27: direction of later ignition time
- 28: direction of higher pressure gradient
- 29: direction of lower pressure gradient

## Claims

1. A reciprocating internal combustion engine comprising:
a combustion chamber defined by a cylinder, a reciprocating piston contained within the cylinder, and a cylinder head,
at least two intake ports in fluid communication with the combustion chamber, a first intake port including an intake valve and a first intake flow motion generating means for creating an air-fuel fluid flow in a first portion of the combustion chamber adjacent the intake port such that the air-fuel fluid flow rotates about an intake fluid vortex axis extending substantially in the direction of reciprocation of the piston within the combustion chamber, and a second intake port including an intake valve and a second intake flow motion generating means for creating an air-fuel fluid flow in a second portion of the combustion chamber such that the air-fuel fluid flow rotates about an intake fluid vortex axis extending substantially in the direction of reciprocation of the piston within the combustion chamber, wherein said second intake flow motion rotates counterclockwise in respect to said first intake flow motion
**characterized in that**
said first intake flow motion generating means and said second intake flow motion generating means are designed to vary the strength of the first and second flow motion, and
said internal combustion engine further comprises load and power determining means for determining the load and/or power of the reciprocating internal combustion engine, and
controlling means using the load and/or power of the reciprocating internal combustion engine determined by said load and power determining means and controlling the strength of the first and second flow motion of said first and second intake flow motion generating means.

2. The reciprocating internal combustion engine according to claim 1, wherein said internal combustion engine is an homogeneous charge compression ignition (HCCI) in which mixed fuel and oxidizer, preferably air, are compressed to the point of auto ignition for at least a range of load and power of the engine.

3. The reciprocating internal combustion engine according to any of claims 1 or 2, wherein said internal combustion engine is a spark ignition internal combustion engine, in which spark ignition is used for at least a range of load and power of the engine.

4. The reciprocating internal combustion engine according to any of claims 1 to 3, wherein specially formed vales, preferably shrouded valves, are arranged in the intakes ports for creating said rotating air-fuel fluid flow and controlling its strength.

5. The reciprocating internal combustion engine according to any of claims 1 to 3, wherein adjustable swirl vanes or flaps are arranged in the intakes ports for creating said rotating air-fuel fluid flow and controlling its strength.

6. The reciprocating internal combustion engine according to any of claims 1 to 3, wherein controllable pressure levels in the intake channels are used for controlling the strength of said rotating air-fuel fluid flow.

7. The reciprocating internal combustion engine according to any of claims 1 to 6, wherein said controlling means using the load and/or power of the reciprocating internal combustion engine determined by said load and power determining means and controlling the strength of the first and second flow motion of said first and second intake flow motion generating means are designed for controlling the strength of the first and second flow motion by a predetermined function with said load and power as an input.

8. The reciprocating internal combustion engine according to any of claims 1 to 6, further comprising measurement means for measuring parameters of the combustion, said parameters are selected from combustion pressure values, combustion timing values and combustion temperatures values wherein said controlling means using the load and/or power of the reciprocating internal combustion engine determined by said load and power determining means and controlling the strength of the first and second flow motion of said first and second intake flow motion generating means are designed for controlling the strength of the first and second flow motion using a feedback of said parameters of the combustion.
